# EUROPEAN PATENT APPLICATION

(11) **EP 4 832 394 A1**
(43) Date of publication of application: **28.10.2026**
(21) Application number: 24906228.2
(22) Date of filing: 12.12.2024
(51) Int. Cl.: H04L 5/00, H04B 7/0456

(54) **DATA PROCESSING METHOD, APPARATUS, TERMINAL, NETWORK DEVICE AND STORAGE MEDIUM**

(30) Priority: 20.12.2023 CN 202311757516
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SHI, Ziye, Beijing 100032 (CN); HAN, Shuangfeng, Beijing 100032 (CN); LI, Gang, Beijing 100032 (CN); WEN, Zirui, Beijing 100032 (CN)
(74) Representative: Murgitroyd & Company
(86) International application number: PCT/CN2024/138749
(87) International publication number: WO 2025/130745

(57) **Abstract**

Provided are a data processing method and apparatus, a terminal, a network device, and a storage medium. The method includes: receiving first configuration information of a codebook sent by a network device; obtaining a first codebook according to the first configuration information; determining a second codebook according to the first codebook, wherein the second codebook is a codebook corresponding to the first codebook and not subjected to decomposition calculation; sending first indication information to the network device according to the first codebook and the second codebook; wherein the first indication information is used to indicate whether a feedback manner using an AI compression model is adopted.

## Description

### CROSS-REFERENCE TO RELATED APPLICATION

This application claims the priority of Chinese Patent Application No. 202311757516.6 filed in China on December 20, 2023, a disclosure of which is incorporated herein by reference in its entirety.

### TECHNICAL FIELD

The present disclosure relates to the field of mobile communication technologies, and in particular, to a data processing method and apparatus, a terminal, a network device, and a storage medium.

### BACKGROUND

In a New Radio (NR) system, Channel State Information (CSI) feedback by a terminal mainly relies on a codebook manner. Currently, CSI type I, type II, type II enhanced (etype II) and other codebook types are supported for feeding back Rank Indicator (RI), Precoding Matrix Indicator (PMI), Channel Quality Indicator (CQI), and the like.

The feedback overhead of an etype II codebook is proportional to the bits occupied by non-zero coefficients and the number of quantization parameters required. Directly extending a low-rank codebook to a high-rank codebook will result in a significant increase in overhead. To reduce the overhead of high-rank codebooks, existing solutions perform rank extension without increasing feedback signaling overhead, and the sum of non-zero coefficients reported for all layers cannot exceed a fixed constant configured by higher layers, which limits the bits of non-zero coefficients. Although the feedback overhead of the codebook is controlled, the accuracy of codebook feedback is also reduced accordingly.

### SUMMARY

At least one embodiment of the present disclosure provides a data processing method and apparatus, a terminal, a network device, and a storage medium, configured to solve the problem in the related art that, in order to reduce overhead of a high-rank codebook, codebook feedback accuracy is reduced.

In order to solve the above technical problem, the present disclosure is implemented as follows.

In a first aspect, an embodiment of the present disclosure provides a data processing method, applied to a terminal, including:
receiving first configuration information of a codebook sent by a network device;
obtaining a first codebook according to the first configuration information;
determining a second codebook according to the first codebook, wherein the second codebook is a codebook corresponding to the first codebook and not subjected to decomposition calculation;
sending first indication information to the network device according to the first codebook and the second codebook; wherein
the first indication information is used to indicate whether a feedback manner using an Artificial Intelligence (AI) compression model is adopted.

Further, the first configuration information includes:
a number of oversampled Discrete Fourier Transform (DFT) beams, a number of DFT basis vectors, and a number of precoding matrices configurable per subband.

Further, obtaining the first codebook according to the first configuration information includes:
performing decomposition calculation on the first configuration information according to a preset codebook format to obtain decomposition data;
encoding the decomposition data to obtain the first codebook.

Further, sending the first indication information to the network device according to the first codebook and the second codebook includes:
determining a first coefficient matrix of the first codebook according to the first codebook;
determining a second coefficient matrix of the second codebook according to the second codebook;
calculating a difference between the first coefficient matrix and the second coefficient matrix;
comparing the difference with a preset threshold to obtain a comparison result;
sending the first indication information to the network device according to the comparison result.

Further, sending the first indication information to the network device according to the comparison result includes:
when the difference is greater than the preset threshold, sending, to the network device, the first indication information used to indicate that the feedback manner using the AI compression model is adopted.

Further, after sending the first indication information to the network device according to the first codebook and the second codebook, the method further includes:
when the first indication information indicates that the feedback manner using the AI compression model is adopted, receiving second configuration information of the codebook and second indication information, wherein the second indication information is used to indicate a target compression model for compressing a coefficient matrix of the codebook;
determining a third codebook according to the second configuration information;
determining a third coefficient matrix of the third codebook according to the third codebook;
compressing the third coefficient matrix by using the target compression model to obtain a fourth coefficient matrix;
sending the fourth coefficient matrix to the network device.

Further, the second indication information includes:
a target configuration parameter used to indicate the target compression model;
wherein the target configuration parameter includes at least one of: a number of DFT basis vectors, a number of oversampled DFT beams, a number of precoding matrices configurable per subband, or a model index.

Further, the method further includes:
sending a first parameter and a second parameter of the third codebook to the network device;
wherein the first parameter is used to report a beam group, and the second parameter includes a DFT vector used for frequency-domain compression.

In a second aspect, an embodiment of the present disclosure provides a data processing method, applied to a network device, including:
determining first configuration information of a codebook;
sending the first configuration information to a terminal, to cause the terminal to obtain a first codebook according to the first configuration information, and determine a second codebook according to the first codebook; wherein the second codebook is a codebook corresponding to the first codebook and not subjected to decomposition calculation;
receiving first indication information sent by the terminal according to the first codebook and the second codebook; wherein
the first indication information is used to indicate whether a feedback manner using an Artificial Intelligence (AI) compression model is adopted.

Further, after receiving the first indication information sent by the terminal, the method further includes:
when the first indication information used to indicate that the feedback manner using the AI compression model is adopted is received, determining second configuration information of the codebook and second indication information used to indicate a target compression model; and
sending the second configuration information and the second indication information to the terminal.

Further, after sending the second configuration information and the second indication information to the terminal, the method further includes:
receiving a fourth coefficient matrix sent by the terminal; wherein the fourth coefficient matrix is obtained by the terminal by compressing, using the target compression model, a third coefficient matrix of a third codebook determined according to the second configuration information;
decompressing the fourth coefficient matrix by using a target decompression model to obtain a fifth coefficient matrix;
determining a codebook of a channel according to the fifth coefficient matrix.

Further, after sending the second configuration information and the second indication information to the terminal, the method further includes:
receiving a first parameter and a second parameter of the third codebook sent by the terminal;
determining the codebook of the channel according to the fifth coefficient matrix includes:
   determining the codebook of the channel according to the fifth coefficient matrix, the first parameter and the second parameter; wherein
   the first parameter is used to report a beam group, and the second parameter includes a Discrete Fourier Transform (DFT) vector used for frequency-domain compression.

Further, the method further includes:
collecting downlink channel estimation data;
determining, according to the downlink channel estimation data, configuration data selectable by the network device; wherein the configuration data includes: a number of DFT basis vectors, a number of oversampled DFT beams, a number of precoding matrices configurable per subband, and a number of frequency basis vectors;
decomposing a codebook corresponding to the downlink channel estimation data according to the configuration data to obtain a sixth coefficient matrix;
grouping the sixth coefficient matrix according to the number of oversampled DFT beams and the number of frequency basis vectors in the sixth coefficient matrix to obtain a plurality of groups of target data;
determining, for each group of the target data, a corresponding compression model and a corresponding decompression model;
training the compression model and the decompression model corresponding to each group of the target data by using the target data, to obtain a model database; wherein the model database is used to store correspondences between compression models and model configuration parameters, and correspondences between decompression models and the compression models; and
sending the model database to the terminal.

Further, the method further includes:
determining, according to a number of elements in the sixth coefficient matrix, a number of target elements of samples for training the compression model and the decompression model;
when the number of elements in the sixth coefficient matrix is less than the number of the target elements, adjusting the target data by zero padding to obtain target sample data;
training the compression model and the decompression model by using the target sample data; wherein
the number of elements in the sixth coefficient matrix is equal to a number of elements corresponding to a matrix formed by the number of oversampled DFT beams and the number of frequency basis vectors.

In a third aspect, an embodiment of the present disclosure provides a data processing apparatus, including:
a first receiving module, configured to receive first configuration information of a codebook sent by a network device;
a first determining module, configured to obtain a first codebook according to the first configuration information;
a second determining module, configured to determine a second codebook according to the first codebook; wherein the second codebook is a codebook corresponding to the first codebook and not subjected to decomposition calculation;
a first sending module, configured to send first indication information to the network device according to the first codebook and the second codebook; wherein
the first indication information is used to indicate whether a feedback manner using an Artificial Intelligence (AI) compression model is adopted.

In a fourth aspect, an embodiment of the present disclosure provides a data processing apparatus, including:
a third determining module, configured to determine first configuration information of a codebook;
a second sending module, configured to send the first configuration information to a terminal, to cause the terminal to obtain a first codebook according to the first configuration information, and determine a second codebook according to the first codebook; wherein the second codebook is a codebook corresponding to the first codebook and not subjected to decomposition calculation;
a second receiving module, configured to receive first indication information sent by the terminal according to the first codebook and the second codebook; wherein
the first indication information is used to indicate whether a feedback manner using an Artificial Intelligence (AI) compression model is adopted.

In a fifth aspect, an embodiment of the present disclosure provides a network device, including a transceiver and a processor, wherein
the processor is configured to determine first configuration information of a codebook;
the transceiver is configured to send the first configuration information to a terminal, to cause the terminal to obtain a first codebook according to the first configuration information, and determine a second codebook according to the first codebook; wherein the second codebook is a codebook corresponding to the first codebook and not subjected to decomposition calculation; and receive first indication information sent by the terminal according to the first codebook and the second codebook; wherein
the first indication information is used to indicate whether a feedback manner using an Artificial Intelligence (AI) compression model is adopted.

In a sixth aspect, an embodiment of the present disclosure provides a terminal, including a transceiver and a processor, wherein
receiving first configuration information of a codebook sent by a network device;
obtaining a first codebook according to the first configuration information, and
determining a second codebook according to the first codebook; wherein the second codebook is a codebook corresponding to the first codebook and not subjected to decomposition calculation;
sending first indication information to the network device according to the first codebook and the second codebook; wherein
the first indication information is used to indicate whether a feedback manner using an Artificial Intelligence (AI) compression model is adopted.

In a seventh aspect, an embodiment of the present disclosure provides a terminal, including: a processor, a memory and a program stored in the memory and executable on the processor, wherein the program, when executed by the processor, implements the steps of the method according to the first aspect.

In an eighth aspect, an embodiment of the present disclosure provides a network device, including: a processor, a memory and a program stored in the memory and executable on the processor, wherein the program, when executed by the processor, implements the steps of the method according to the second aspect.

In a ninth aspect, an embodiment of the present disclosure provides a computer-readable storage medium storing a program, wherein the program, when executed by a processor, implements the steps of the method as described above.

In a tenth aspect, an embodiment of the present disclosure provides a computer program product including computer instructions, wherein the computer instructions, when executed by a processor, implement the steps of the method as described above.

Compared with the related art, in the data processing method and apparatus, the terminal, the network device and the storage medium provided in the embodiments of the present disclosure, a first codebook can be determined according to received first configuration information of a codebook; a second codebook is obtained after restoring the first codebook; and first indication information indicating whether a feedback manner using an Artificial Intelligence (AI) compression model is adopted is sent to the network device according to the first codebook and the second codebook. According to the solution of the present disclosure, by means of the first indication information, the network device can be indicated to adopt the feedback manner using the AI compression model, thereby ensuring the accuracy of codebook feedback while reducing codebook overhead.

### BRIEF DESCRIPTION OF THE DRAWINGS

By reading the following detailed description of preferred embodiments, various other advantages and benefits will become clear to those of ordinary skill in the art. The drawings are only for the purpose of illustrating preferred embodiments and are not to be considered as limiting the present disclosure. Moreover, throughout the drawings, the same reference numerals are used to denote the same components. In the drawings:
FIG. 1 is a schematic diagram of an application scenario according to an embodiment of the present disclosure;
FIG. 2 is a schematic diagram of a general decomposition form of a precoding matrix according to an embodiment of the present disclosure;
FIG. 3 is a flowchart of a data processing method applied to a terminal side according to an embodiment of the present disclosure;
FIG. 4 is a flowchart of a data processing method according to an embodiment of the present disclosure;
FIG. 5 is a flowchart of a data processing method applied to a network device side according to an embodiment of the present disclosure;
FIG. 6 is a schematic structural diagram of a data processing apparatus according to an embodiment of the present disclosure;
FIG. 7 is a schematic structural diagram of a data processing apparatus according to another embodiment of the present disclosure;
FIG. 8 is a schematic structural diagram of a network device according to an embodiment of the present disclosure;
FIG. 9 is a schematic structural diagram of a terminal according to an embodiment of the present disclosure;
FIG. 10 is a schematic structural diagram of a terminal according to another embodiment of the present disclosure;
FIG. 11 is a schematic structural diagram of a network device according to another embodiment of the present disclosure.

### DETAILED DESCRIPTION

With reference to the accompanying drawings, exemplary embodiments of the present disclosure will be described in greater detail below. Although exemplary embodiments of the present disclosure are shown in the drawings, it should be understood that the present disclosure may be implemented in various forms and should not be limited to the embodiments set forth herein. Rather, these embodiments are provided to enable a more thorough understanding of the present disclosure and to fully convey the scope of the present disclosure to those skilled in the art.

The terms "first", "second" and the like in the specification and claims of the present disclosure are used to distinguish similar objects, and are not necessarily used to describe a specific order or sequence. It should be understood that data used may be interchanged under appropriate circumstances so that the embodiments of the present disclosure described herein can be implemented in an order other than those illustrated or described herein. Furthermore, the terms "include" and "have" and any variations thereof are intended to cover non-exclusive inclusion. For example, a process, method, system, product or device that includes a series of steps or units is not necessarily limited to those steps or units explicitly listed, but may include other steps or units not explicitly listed or inherent to such process, method, product or device. The term "and/or" in the specification and claims means at least one of the connected objects.

The techniques described herein are not limited to NR systems and Long Time Evolution (LTE)/LTE-Advanced (LTE-A) systems, and may also be used for various wireless communication systems such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA), and other systems. The terms "system" and "network" are often used interchangeably. A CDMA system may implement radio technologies such as CDMA2000, Universal Terrestrial Radio Access (UTRA), etc. UTRA includes Wideband Code Division Multiple Access (WCDMA) and other CDMA variants. A TDMA system may implement radio technologies such as Global System for Mobile Communication (GSM). An OFDMA system may implement radio technologies such as Ultra Mobile Broadband (UMB), Evolution-UTRA (E-UTRA), Institute of Electrical and Electronics Engineers (IEEE) 802.21 Wireless Fidelity (Wi-Fi), IEEE 802.16 Worldwide Interoperability for Microwave Access (WiMAX), IEEE 802.20, Flash-Orthogonal Frequency Division Multiplexing (Flash-OFDM), etc. UTRA and E-UTRA are parts of the Universal Mobile Telecommunications System (UMTS). LTE and more advanced LTE (such as LTE-A) are new UMTS versions using E-UTRA. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for both the systems and radio technologies mentioned above as well as other systems and radio technologies. However, the following description describes an NR system for exemplary purposes, and NR terminology is used in much of the following description, although these techniques may also be applied to applications other than NR system applications.

The following description provides examples and does not limit the scope, applicability, or configuration set forth in the claims. Changes may be made in the function and arrangement of the elements discussed without departing from the spirit and scope of the present disclosure. Various examples may omit, substitute, or add various procedures or components appropriately. For example, the methods described may be performed in an order different from that described, and various steps may be added, omitted, or combined. In addition, features described with reference to certain examples may be combined in other examples.

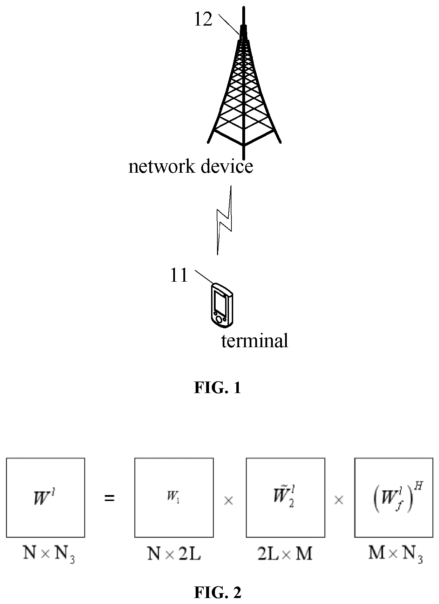

Referring to FIG. 1, which shows a block diagram of a wireless communication system to which embodiments of the present disclosure may be applied. The wireless communication system includes a terminal 11 and a network device 12. The terminal 11 may also be referred to as a user terminal or User Equipment (UE). The terminal 11 may be a mobile phone, a tablet personal computer, a laptop computer, a Personal Digital Assistant (PDA), a Mobile Internet Device (MID), a wearable device, or a vehicle-mounted device, or other terminal-side devices. It should be noted that the specific type of the terminal 11 is not limited in the embodiments of the present disclosure. The network device 12 may be a base station and/or a core network element, wherein the base station may be a base station of 5th Generation Mobile Communication Technology (5G) and later versions (e.g., the next Generation Node B (gNB), 5G NR NodeB (NB), etc.), or a base station in other communication systems (e.g., eNB, Wireless Local Area Network (WLAN) access point, or other access point, etc.), wherein the base station may be referred to as a node B, an evolved node B, an access point, a Base Transceiver Station (BTS), a radio base station, a radio transceiver, a Basic Service Set (BSS), an Extended Service Set (ESS), a B node, an Evolved Node B (eNB), a home B node, a home evolved B node, a WLAN access point, a WiFi node, or other suitable terms in the field. As long as the same technical effect is achieved, the base station is not limited to specific technical terms. It should be noted that in the embodiments of the present disclosure, only a base station in an NR system is taken as an example, but the specific type of the base station is not limited.

The base station may communicate with the terminal 11 under the control of a base station controller. In various examples, the base station controller may be part of a core network or some base stations. Some base stations may communicate control information or user data with the core network through backhaul. In some examples, some of these base stations may communicate with each other directly or indirectly through backhaul links, which may be wired or wireless communication links. The wireless communication system may support operations on multiple carriers (waveform signals of different frequencies). A multi-carrier transmitter can transmit modulated signals on these multiple carriers simultaneously. For example, each communication link may be a multi-carrier signal modulated according to various radio technologies. Each modulated signal may be transmitted on a different carrier and may carry control information (e.g., reference signals, control channels, etc.), overhead information, data, etc.

The base station may communicate wirelessly with the terminal 11 via one or more access point antennas. Each base station may provide communication coverage for a respective coverage area. The coverage area of an access point may be divided into sectors that constitute only a portion of the coverage area. The wireless communication system may include different types of base stations (e.g., macro base stations, micro base stations, or pico base stations). The base stations may also utilize different radio technologies, such as cellular or WLAN radio access technologies. The base stations may be associated with the same or different access networks or operator deployments. Coverage areas of different base stations (including coverage areas of the same or different types of base stations, coverage areas utilizing the same or different radio technologies, or coverage areas belonging to the same or different access networks) may overlap.

Communication links in the wireless communication system may include an uplink for carrying Uplink (UL) transmission (e.g., from the terminal 11 to the network device 12), or a downlink for carrying Downlink (DL) transmission (e.g., from the network device 12 to the terminal 11). UL transmission may also be referred to as reverse link transmission, while DL transmission may also be referred to as forward link transmission. Downlink transmission may use licensed bands, unlicensed bands, or both. Similarly, uplink transmission may use licensed bands, unlicensed bands, or both.

In the embodiments of the present disclosure, the number of transmitting antennas on the base station side is N, the number of receiving antennas on the user side is N1, a channel matrix H (with dimension *N*₁ *× N)* is calculated, the rank value RI of the channel matrix H is calculated, the number of subbands is *N_{sb},* the number of precoding matrices is *N*₃, *N*₃ = *N_{sb}* × *R,* R is configured by a higher-layer parameter number Of PMI Subbands PerCQISubband-r16, and takes a value of {1, 2}, indicating the number of precoding matrices configurable per subband. The channel matrix corresponding to the frequency f of a Physical Resource Block (PRB) selected from a subband is denoted as *N*₃, eigenvalue decomposition is performed on ${H}_{f}^{H} {H}_{f}$ (the superscript H denotes conjugate transpose), the first RI eigenvalues are recorded and sorted in descending order, and the corresponding eigenvectors are denoted as *V*_{*f*1}*, V*_{*f*2}*, ... , V_{fRI},* respectively. The eigenvectors corresponding to the l-th layer (stream) of all subbands are concatenated to obtain [*V*₁*ₗ, V*₂*ₗ, ... , V*_{*N*₃*l*}]*,* which is denoted as *W^{l}.* The codebook *W^{(RI)}* may be expressed in the following form: ${W}^{\left(RI\right)} = \left\{\begin{matrix}{W}^{1} & , RI = 1 \\ \frac{1}{\sqrt{RI}} \left[{W}^{1},…,{W}^{RI}\right] & , RI = 2\end{matrix}\right.$

According to the etype II codebook, W¹ may be decomposed as follows: ${W}^{l} = {W}_{1} {{W}_{2}^{ι}}^{˜} {\left({W}_{f}^{l}\right)}^{H}$ wherein W₁ is used to report a beam group, and *W*₁ is in the form of $\left[\begin{matrix}{b}_{0} , L , {b}_{L - 1} & 0 \\ 0 & {b}_{0} , L , {b}_{L - 1}\end{matrix}\right]$, [*b*₀*, L, b*_{*L-*1}] corresponds to L oversampled Discrete Fourier Transform (DFT) beams, and *W}* matrix is composed of DFT vectors used for frequency-domain compression.

Specifically, the general decomposition form of the R16 etype II precoding matrix is shown in FIG. 2, wherein N is the number of Channel State Information-Reference Signal (CSI-RS) ports (corresponding to N transmit antennas), and M is the number of frequency basis vectors.

The current transmission mode of the etype II codebook requires quantizing the coefficient matrix by mapping it to a low-precision quantization set, and then transmitting it to the base station.

For different RIs, $\frac{1}{\sqrt{RI}} \left[{W}^{1},…,{W}^{RI}\right]$ is denoted as ${{W}_{2}}^{˜}$, and $\left[{W}_{f}^{1},…,{W}_{f}^{RI}\right]$ is denoted as *W_{f}*.

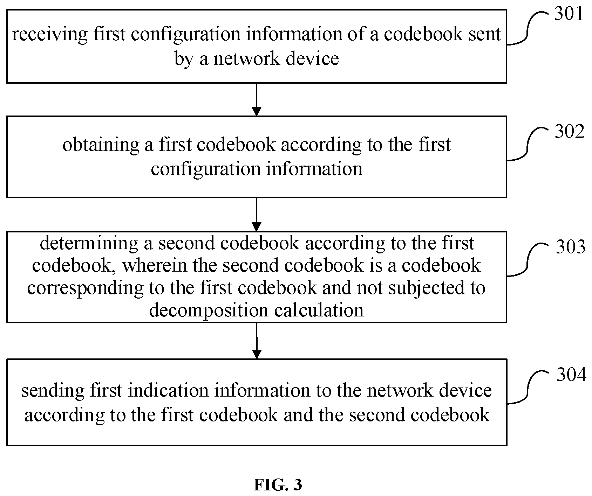

As shown in FIG. 3, an embodiment of the present disclosure provides a data processing method, applied to a terminal, including the following steps:
step 301: receiving first configuration information of a codebook sent by a network device;
step 302: obtaining a first codebook according to the first configuration information;
step 303: determining a second codebook according to the first codebook, wherein the second codebook is a codebook corresponding to the first codebook and not subjected to decomposition calculation;
step 304: sending first indication information to the network device according to the first codebook and the second codebook; wherein
the first indication information is used to indicate whether a feedback manner using an Artificial Intelligence (AI) compression model is adopted.

Optionally, the terminal has accessed the network and is in a Radio Resource Control (RRC)-CONNECTED state.

In the embodiments of the present disclosure, an AI model training system for a Radio Access Network (RAN) (deployed on a Centralized Unit (CU) and/or a Distributed Unit (DU) of a base station, or on a logical entity across CUs) collects downlink channel estimation data, and configures the number of oversampled DFT beams selectable by the network device and R; and decomposes the channel estimation data according to the number of downlink subbands in an etype II codebook format to obtain unquantized ${{W}_{2}}^{˜}$.

Subsequently, an auto-encoder model is designed based on data dimensions and is trained offline. A trained compression model, a model index, and a model index table related to model features (optional) are synchronized to a terminal; and a decompression model, a model index, and a model index table (optional) are synchronized to the network device (e.g., a base station).

Finally, the base station presets a difference threshold δ_{RI} according to the accuracy requirement of the feedback channel and RI (1 ≤ RI ≤ RImax); wherein a higher the accuracy requirement of the feedback channel and a higher the RI correspond to a lower difference threshold.

In the embodiments of the present disclosure, the network device (e.g., base station) sends, via broadcast, unicast, or multicast, RI (1 ≤ RI ≤ RImax) and the corresponding difference threshold *δ_{RI}* to the terminal;
and configures the first configuration information (including a number of oversampled DFT beams L, a number used to determine DFT basis vectors *Pᵥ*, and R) according to historical information, complexity, performance, and the like, and sends the first configuration information to the terminal;
the terminal determines the first codebook according to the first configuration information; the first codebook is obtained by performing decomposition calculation and then recombining into a general form of the precoding matrix as shown in FIG. 2;
the terminal restores the first codebook into a codebook format (the second codebook) not subjected to decomposition calculation.

In the data processing method provided in the embodiments of the present disclosure, a first codebook is determined according to received first configuration information of a codebook; a second codebook is obtained after restoring the first codebook; and first indication information indicating whether a feedback manner using an Artificial Intelligence (AI) compression model is adopted is sent to a network device according to the first codebook and the second codebook. According to the solution of the present disclosure, by means of the first indication information, the network device can be indicated to adopt the feedback manner using the AI compression model, thereby ensuring the accuracy of codebook feedback while reducing codebook overhead.

Optionally, the first configuration information includes:
a number of oversampled DFT beams, a number of DFT basis vectors, and a number of precoding matrices configurable per subband.

Optionally, obtaining the first codebook according to the first configuration information includes:
performing decomposition calculation on the first configuration information according to a preset codebook format to obtain decomposition data;
encoding the decomposition data to obtain the first codebook.

Optionally, sending the first indication information to the network device according to the first codebook and the second codebook includes:
determining a first coefficient matrix of the first codebook according to the first codebook;
determining a second coefficient matrix of the second codebook according to the second codebook;
calculating a difference between the first coefficient matrix and the second coefficient matrix;
comparing the difference with a preset threshold to obtain a comparison result; the preset threshold is configured by the network device and sent to the terminal;
sending the first indication information to the network device according to the comparison result.

In the embodiments of the present disclosure, the difference between the first coefficient matrix and the second coefficient matrix is calculated using a norm between matrices, specifically: $Δ = \frac{{\left‖{W}^{\left(RI\right) "}-{W}^{\left(RI\right)}\right‖}_{F}}{{\left‖{W}^{\left(RI\right)}\right‖}_{F}}$ wherein *W*^{(*RI*)} represents the first coefficient matrix, *W*^{(*RI*)}" represents the second coefficient matrix, Δ represents the difference between the first coefficient matrix and the second coefficient matrix, and F represents a norm.

According to the data processing method in the embodiments of the present disclosure, by comparing the difference between coefficient matrices of a codebook not subjected to decomposition calculation and a codebook subjected to decomposition calculation, the impact of decomposition calculation on codebook integrity can be determined, thereby determining the feedback manner of the terminal, and ensuring accuracy of codebook feedback while reducing codebook overhead.

Optionally, sending the first indication information to the network device according to the comparison result includes:
when the difference is greater than the preset threshold, sending, to the network device, the first indication information used to indicate that the feedback manner using the AI compression model is adopted.

Optionally, the threshold is sent by the network device to the terminal.

Optionally, the format of the first indication information is a flag bit.

In the embodiments of the present disclosure, when the first indication information is used to indicate that the feedback manner using the AI compression model is adopted, the flag bit is 1; when the first indication information is used to indicate that the feedback manner using the etype II codebook is adopted, the flag bit is 0.

In the embodiments of the present disclosure, when the difference is greater than the preset threshold (difference threshold *δ_{RI}*), it indicates that the decomposition calculation has a relatively large impact on codebook integrity, and adopting the feedback manner using the etype II codebook will result in insufficient feedback accuracy; therefore, the first indication information indicating that the feedback manner using the AI compression model is adopted needs to be sent to the network device.

When the difference is less than the preset threshold, the feedback manner using the etype II codebook is adopted.

Optionally, after sending the first indication information to the network device according to the first codebook and the second codebook, the method further includes:
when the first indication information indicates that the feedback manner using the AI compression model is adopted, receiving second configuration information of the codebook and second indication information, wherein the second indication information is used to indicate a target compression model for compressing a coefficient matrix of the codebook;
determining a third codebook according to the second configuration information;
determining a third coefficient matrix of the third codebook according to the third codebook;
compressing the third coefficient matrix by using the target compression model to obtain a fourth coefficient matrix;
sending the fourth coefficient matrix to the network device.

Optionally, sending the fourth coefficient matrix to the network device includes:
sending the fourth coefficient matrix on a first resource;
wherein the first resource is determined according to resource information in the second indication information.

Optionally, determining the third codebook according to the second configuration information includes:
calculating the second configuration information according to a preset codebook format to obtain the third codebook.

In the embodiments of the present disclosure, when the first indication information indicates that the feedback manner using the AI compression model is adopted, the network device, based on the received first indication information, reselects the configuration information according to historical experience and the like, determines the second configuration information (L, the number of oversampled DFT beams *Pᵥ*, R, and time-frequency resources (e.g., Resource Elements (REs)) required for the terminal to feed back CSI compressed feedback information); and sends the second configuration information and configuration information of the compression feedback model (the second indication information) to the terminal through a downlink channel.

The terminal measures the CSI-RS of the downlink channel reference signal, and calculates an unquantized third codebook in the etype II codebook format according to the received second configuration information;
and selects a channel compression model according to the computation model index in the second configuration information, and compresses the third codebook through the channel compression model.

In the embodiments of the present disclosure, compressing the third codebook includes: compressing the third coefficient matrix ${{W}^{˜}}_{2} \left(t\right)$ of the third codebook to obtain a fourth coefficient matrix ${{W}^{˜}}_{2} {\left(t\right)}^{z}$;
and determines the first resource according to resource configuration, and sends the fourth coefficient matrix to the network device on the first resource.

According to the data processing method of the embodiments of the present disclosure, by compressing the third coefficient matrix and then sending it to the network device, data overhead can be reduced.

Optionally, the second indication information includes:
a target configuration parameter used to indicate the target compression model;
wherein the target configuration parameter includes at least one of: a number of DFT basis vectors, a number of oversampled DFT beams, a number of precoding matrices configurable per subband, or a model index.

Optionally, the second indication information further includes:
resource information for the terminal to send the fourth coefficient matrix;
wherein the resource information includes: time-frequency resources.

According to the data processing method of the embodiments of the present disclosure, the third codebook is determined according to the received second configuration information, and the third codebook is compressed according to the received second indication information; so that the network device parses the third codebook according to the compressed third codebook to obtain all data of the third codebook, thereby ensuring the integrity and accuracy of the third codebook data.

In the embodiments of the present disclosure, compressing the third codebook includes: compressing the third coefficient matrix ${{W}^{˜}}_{2} \left(t\right)$ of the third codebook to obtain a fourth coefficient matrix ${{W}^{˜}}_{2} {\left(t\right)}^{z}$;
and determines the first resource according to resource configuration, and sends the fourth coefficient matrix to the network device on the first resource.

According to the data processing method of the embodiments of the present disclosure, by compressing the third coefficient matrix and then sending it to the network device, data overhead can be reduced.

Optionally, the method further includes:
sending a first parameter and a second parameter of the third codebook to the network device;
wherein the first parameter is used to report a beam group, and the second parameter includes a DFT vector used for frequency-domain compression.

Optionally, sending the first parameter and the second parameter of the third codebook to the network device includes:
feeding back the first parameter and the second parameter to the network device through an etype II codebook feedback mode.

In the embodiments of the present disclosure, the first parameter W₁(t) and the second parameter *W_{f}*(*t*) are fed back to the network device through the etype II codebook feedback mode.

According to the data processing method of the embodiments of the present disclosure, by compressing the third coefficient matrix and then sending it to the network device, data overhead can be reduced; and by sending the first parameter and the second parameter to the network device, the network device can parse the third codebook according to the fourth coefficient matrix, the first parameter and the second parameter, thereby obtaining all data information of the third codebook.

In the embodiments of the present disclosure, after receiving the fourth coefficient matrix ${{W}^{˜}}_{2} {\left(t\right)}^{z}$, the network device decompresses the fourth coefficient matrix ${{W}^{˜}}_{2} {\left(t\right)}^{z}$ through the decompression model to obtain a fifth coefficient matrix ${{W}_{2}}^{˜} \left(t\right) ′$; and performs supplementary calculation on the fifth coefficient matrix ${{W}_{2}}^{˜} \left(t\right) ′$ according to the first parameter W₁(t) and the second parameter W_{f}(t) to obtain the codebook W^{(RI)}(T).

Subsequently, the terminal continues to monitor the CSI-RS.

The network device adjusts L, Pᵥ and R according to the condition of the codebook W^{(RI)}(T) (mainly considering the complexity and performance of the codebook), and configures the terminal through higher-layer signaling (e.g., Radio Resource Control (RRC)) to adjust the model configuration information of the compression feedback model to the terminal.

The terminal adjusts the calculation of the codebook and the selection of the model according to the model configuration information adjusted by the network device, thereby completing the compressed feedback of the channel.

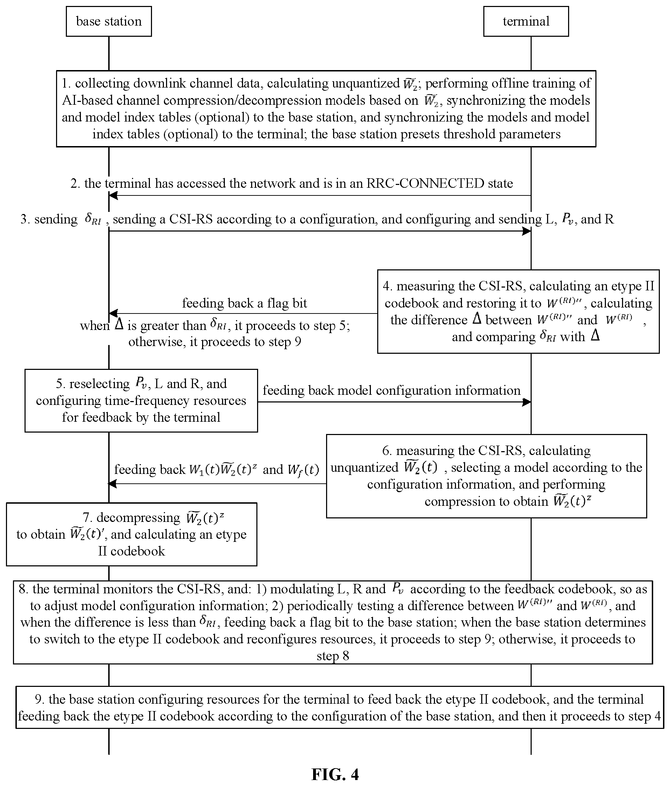

As shown in FIG. 4, the data processing method according to an embodiment of the present disclosure:
1. collecting downlink channel data, calculating unquantized ${{W}_{2}}^{˜}$; and performing offline training of AI-based channel compression/decompression models based on ${{W}_{2}}^{˜}$, and synchronizing the models and model index tables to the base station and the terminal; meanwhile, the base station presets a difference threshold δ_{RI};
2. the terminal has accessed the network and is in a Radio Resource Control (RRC)-CONNECTED state;
3. the base station sends the difference threshold δ_{RI} to the terminal, and configures CSI-RS, L, Pᵥ and R for the terminal;
4. the terminal measures the CSI-RS, calculates the etype II codebook and restores it to *W*^{(*RI*)}" , calculates the difference Δ between *W*^{(*RI*)}" and W^{(RI)}, and compares Δ with the difference threshold δ_{RI}; and feeds back a flag bit to the base station; when Δ is greater than the difference threshold δ_{RI}, it proceeds to step 5; otherwise, it proceeds to step 9;
5. the base station reselects L, Pᵥ and R according to the flag bit fed back by the terminal, and configures, for the terminal, time-frequency resources for feedback by the terminal and model configuration information;
6. the terminal measures and calculates unquantized ${{W}^{˜}}_{2} \left(t\right)$, determines a compression model according to the model configuration information, and compresses ${{W}^{˜}}_{2} \left(t\right)$ by using the compression model to obtain ${{W}_{2}}^{˜} {\left(t\right)}^{z}$, and feeds back ${{W}_{2}}^{˜} {\left(t\right)}^{z}$, W₁(t), and W_{f}(t) to the base station;
7. the base station decompresses ${{W}^{˜}}_{2} {\left(t\right)}^{z}$, and calculates the etype II codebook according to W₁(t) and W_{f}(t);
8. the terminal continuously monitors the CSI-RS, and adjusts L, Pᵥ, and R according to a feedback codebook, so as to adjust model configuration information; the terminal periodically tests a difference between *W*^{(*RI*)}" and W^{(RI)}, and feeds back a flag bit to the base station; when the base station determines that switching to the etype II codebook is required, resources are reconfigured and it proceeds to step 9; otherwise, it proceeds to step 8;
9. the base station configures resources for the terminal to feed back the etype II codebook, and the terminal feeds back the etype II codebook according to the configuration of the base station, and then it proceeds to step 4.

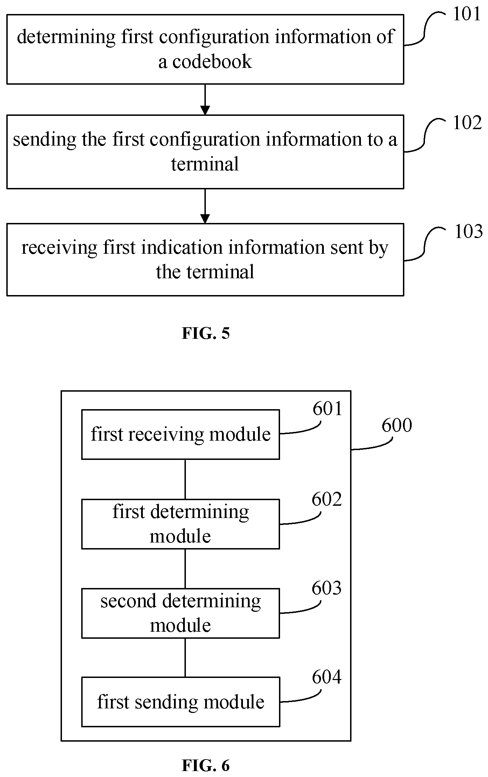

As shown in FIG. 5, an embodiment of the present disclosure further provides a data processing method, applied to a network device, including the following steps:
step 501: determining first configuration information of a codebook;
step 502: sending the first configuration information to a terminal, to cause the terminal to obtain a first codebook according to the first configuration information, and determine a second codebook according to the first codebook; wherein the second codebook is a codebook corresponding to the first codebook and not subjected to decomposition calculation;
step 503: receiving first indication information sent by the terminal according to the first codebook and the second codebook; wherein
the first indication information is used to indicate whether a feedback manner using an AI compression model is adopted.

According to the data processing method of the embodiments of the present disclosure, the network device determines first configuration information of a codebook, so that the terminal can determine the first indication information according to the first configuration information, and thus the network device determines whether to adopt the feedback manner using the AI compression model according to the first configuration information, thereby ensuring the accuracy of codebook feedback while reducing codebook overhead.

Optionally, after receiving the first indication information sent by the terminal, the method further includes:
when the first indication information used to indicate that the feedback manner using the AI compression model is adopted is received, determining second configuration information of the codebook and second indication information used to indicate a target compression model; and
sending the second configuration information and the second indication information to the terminal.

Optionally, the second indication information includes:
configuration parameters of the target compression model and resource information;
wherein the configuration parameters of the target compression model include at least one of: a number of DFT basis vectors, a number of oversampled DFT beams, a number of precoding matrices configurable per subband, or a model index.

According to the data processing method of the embodiments of the present disclosure, when it is determined that the feedback manner using the AI compression model needs to be adopted, the configuration information of the codebook is adjusted to obtain the second configuration information, and the configuration parameters of the target compression model for compressing the coefficient matrix of the codebook are obtained, so that the terminal can determine the third coefficient matrix of the codebook according to the second configuration information, and determine the target model for compressing the third coefficient matrix through the configuration parameters of the target compression model.

Optionally, after sending the second configuration information and the second indication information to the terminal, the method further includes:
receiving a fourth coefficient matrix sent by the terminal; wherein the fourth coefficient matrix is obtained by the terminal by compressing, using the target compression model, a third coefficient matrix of a third codebook determined according to the second configuration information;
decompressing the fourth coefficient matrix by using a target decompression model to obtain a fifth coefficient matrix;
determining a codebook of a channel according to the fifth coefficient matrix.

It should be noted that the target decompression model is a model corresponding to the target compression model.

Optionally, receiving the fourth coefficient matrix sent by the terminal includes:
receiving the fourth coefficient matrix on a first resource; wherein the first resource is determined according to the second indication information;
the first resource includes: time-frequency resources.

According to the data processing method of the embodiments of the present disclosure, by decompressing the fourth coefficient matrix, the fifth coefficient matrix can be obtained, and thus the codebook can be determined according to the fifth coefficient matrix, thereby ensuring the accuracy of codebook feedback while reducing codebook overhead.

Optionally, after sending the second configuration information and the second indication information to the terminal, the method further includes:
receiving a first parameter and a second parameter of the third codebook sent by the terminal;
determining the codebook of the channel according to the fifth coefficient matrix includes:
   determining the codebook of the channel according to the fifth coefficient matrix, the first parameter and the second parameter; wherein
   the first parameter is used to report a beam group, and the second parameter includes a Discrete Fourier Transform (DFT) vector used for frequency-domain compression.

According to the data processing method of the embodiments of the present disclosure, all data of the codebook can be reconstructed based on the fifth coefficient matrix, the first parameter and the second parameter, thereby ensuring the accuracy of codebook feedback while reducing codebook overhead.

Optionally, the method further includes:
collecting downlink channel estimation data;
determining, according to the downlink channel estimation data, configuration data selectable by the network device; wherein the configuration data includes: a number of DFT basis vectors, a number of oversampled DFT beams, a number of precoding matrices configurable per subband, and a number of frequency basis vectors;
decomposing a codebook corresponding to the downlink channel estimation data according to the configuration data to obtain a sixth coefficient matrix;
grouping the sixth coefficient matrix according to the number of oversampled DFT beams and the number of frequency basis vectors in the sixth coefficient matrix to obtain a plurality of groups of target data;
determining, for each group of the target data, a corresponding compression model and a corresponding decompression model;
training the compression model and the decompression model corresponding to each group of the target data by using the target data, to obtain a model database; wherein the model database is used to store correspondences between compression models and model configuration parameters, and correspondences between decompression models and the compression models; and
sending the model database to the terminal.

Optionally, the sixth coefficient matrix is unquantized channel data obtained by calculating the codebook of the uplink channel according to a preset codebook format.

In an embodiment of the present disclosure, the sixth coefficient matrix is unquantized ${{W}_{2}^{u}}^{˜}$ calculated in the etype II codebook format.

In the embodiments of the present disclosure, an AI model training system for a Radio Access Network (RAN) (deployed on a CU and/or a DU of a base station, or on a logical entity across CUs) collects downlink channel estimation data, and configures the number of oversampled DFT beams selectable by the network device and R; and decomposes the channel estimation data according to the number of downlink subbands in an etype II codebook format to obtain unquantized ${{W}_{2}}^{˜}$.

Subsequently, an auto-encoder model is designed based on data dimensions and is trained offline. A trained compression model, a model index, and a model index table related to model features (optional) are synchronized to a terminal; and a decompression model, a model index, and a model index table (optional) are synchronized to the network device (e.g., a base station).

Optionally, the method further includes:
determining, according to a number of elements in the sixth coefficient matrix, a number of target elements of samples for training the compression model and the decompression model;
when the number of elements in the sixth coefficient matrix is less than the number of the target elements, adjusting the target data by zero padding to obtain target sample data;
training the compression model and the decompression model by using the target sample data; wherein
the number of elements in the sixth coefficient matrix is equal to a number of elements corresponding to a matrix formed by the number of oversampled DFT beams and the number of frequency basis vectors.

According to the data processing method of the embodiments of the present disclosure, both the compression model and the decompression model are models capable of generalizing with respect to a number of input elements, and model training can be performed for different configuration parameters, thereby improving the applicability of the models.

In the embodiments of the present disclosure, the training method of the model may be:
first, according to collected downlink channel samples, L, Pᵥ and R selectable by the base station, M = Pᵥ × N₃ × R, assuming that data is grouped and models are designed according to the difference of L × M. The input of the model is 2 × L × M, forming a table as shown in Table 1:

**Table 1: Model Index Table Corresponding to L × M**

| Model Index | L×M |
|---|---|
| 1 | 2 |
| 2 | 4 |
| 3 | 8 |
| 4 | 12 |
| 5 | 16 |
| 6 | 24 |
| 7 | 32 |

During model training, elements ${{W}_{2}}^{˜}$ in $\frac{1}{\sqrt{RI}} \left[{W}^{1},…,{W}^{RI}\right]$ need to be passed through the compression/decompression models in order to obtain ${{W}_{2}^{i} ′}^{˜}$, and the compression/decompression process is performed RI times, and the obtained ${{W}_{2}^{i} ′}^{˜}$ are concatenated to obtain $\frac{1}{\sqrt{RI}} \left[{{W}_{2}^{i}}^{˜}′,…,{{W}_{2}^{RI} ′}^{˜}\right]$, i.e., *W*^{(*RI*)}*'.*

In an embodiment of the present disclosure, the model training method may further include: selecting, according to a dimension 2 × L × M of elements ${{W}_{2}^{ι}}^{˜}$ in collected samples ${{W}_{2}}^{˜}$*,* a maximum value of 2 × L × M and denoting it as [2 × L × *M]max* as a number of input elements for designing an Artificial Intelligence (AI) model. During model training/inference, when a dimension 2 × L × M of elements ${{W}_{2}^{ι}}^{˜}$ in samples $\frac{1}{\sqrt{RI}} \left[{{W}_{2}^{i}}^{˜},…,{{W}_{2}^{RI}}^{˜}\right]$ is less than [2 × L × M]*max,* ${{W}_{2}^{ι}}^{˜}$ is flattened into a vector and then extended by zero padding so that a length thereof reaches [2 × L × M]max , and is sequentially processed by a compression model/decompression model. The model training/inference is performed RI times in total. According to the above design, the model is a model capable of generalizing with respect to the number of input elements, and therefore only one model is required.

An AI model training system for a Radio Access Network (RAN) (deployed on a CU and/or a DU of a base station, or on a logical entity across CUs) collects downlink channel estimation data, configures L, Pᵥ and R selectable by the base station, decomposes the data according to different L, *Pᵥ,* R and the number of downlink subbands in an etype II codebook format to obtain unquantized ${{W}_{2}}^{˜}$, designs an auto-encoder model according to data dimensions and performs offline training, synchronizes the trained compression models, indices and Table 1 to the terminal, and synchronizes decompression models, indices and Table 1 to the base station; the base station presets a difference threshold *δ_{RI}* = 0.1 according to the accuracy requirement of the feedback channel and RI.

The terminal has accessed the network and is in a Radio Resource Control (RRC)-CONNECTED state.

The base station sends (may broadcast, unicast, or multicast) RI (1 ≤ *RI* ≤ *RImax)* and the corresponding *δ_{RI}* to the terminal, configures the number of downlink subbands to be 16, sends a CSI-RS to the terminal according to the configuration, and configures L = 4, *Pᵥ* = 1/8, R = 1 according to historical information, complexity, performance, and the like, and sends them to the terminal.

The terminal measures the downlink channel reference signal CSI-RS and calculates its etype II codebook and RI, restores the decomposed codebook to a format before decomposition, denoted as *W^{(RI)}",* calculates the difference between *W^{(RI)}"* and *W^{(RI)},* compares Δ with the threshold 0.1, and when Δ is greater than 0.1, feeds back a flag bit "1" indicating that AI compression feedback is adopted to the base station.

When the base station receives the flag bit indicating that AI compression feedback is adopted, it reselects L, *Pᵥ* and R according to historical experience and the like, for example, configures L = 4, *Pᵥ* = 1/8, R = 1, thus calculates M = 2, selects the corresponding model index 3 from Table 1 according to M = 2, L = 4, configures time-frequency resources (e.g., number of REs) required for the terminal to feed back CSI compressed feedback information, and sends the compression feedback model configuration information (including the reselected L, *Pᵥ,* R and resources) to the terminal through a Physical Downlink Control Channel (PDCCH)/Physical Downlink Shared Channel (PDSCH).

The terminal measures the downlink channel reference signal CSI-RS, calculates unquantized ${{W}^{˜}}_{2} \left(t\right)$ in the etype II codebook format according to *Pᵥ,* L, R in the model configuration information, selects the channel compression model with index 3 through computation according to the received channel compression feedback model configuration information and completes compression of ${{W}^{˜}}_{2} \left(t\right)$*,* with the compressed channel information denoted as ${{W}^{˜}}_{2} {\left(t\right)}^{z}$, and feeds back ${{W}^{˜}}_{2} \left(t\right)$ to the base station according to the resource configuration, and simultaneously feeds back *W*₁(*t*) and *W_{f}*(*t*) in the etype II codebook feedback mode.

The base station receives *W*₁(*t*), ${{W}_{2}}^{˜} {\left(t\right)}^{z}$ and *W_{f}*(*t*) fed back by the terminal, obtains ${{W}_{2}}^{˜} \left(t\right) ′$ by applying the decompression model to ${{W}^{˜}}_{2} {\left(t\right)}^{z}$, and calculates *W^{(RI)}(T)* by ${W}_{1} \left(t\right) {{W}^{˜}}_{2} \left(t\right) ′ {W}_{f} {\left(t\right)}^{T}$*.*

An AI model training system for a Radio Access Network (RAN) (deployed on a CU and/or a DU of a base station, or on a logical entity across CUs) collects downlink channel estimation data, configures L, Pᵥ and R selectable by the base station, decomposes the data according to L, *Pᵥ,* R and the number of downlink subbands in an etype II codebook format to obtain unquantized ${{W}_{2}}^{˜}$, records [2 × L × M]*max ,* designs an auto-encoder model using [2 × L × M]*max* as the number of input elements of the model, performs zero padding on samples in which a dimension 2 × L × M of an element ${{W}_{2}^{ι}}^{˜}$ is less than [2 × L × M]*max* to form new samples, performs offline training on the model, synchronizes the trained compression model to the terminal, and synchronizes the decompression model to the base station; the base station presets a difference threshold *δ_{RI}* = 0.1 according to the accuracy requirement of the feedback channel and RI.

The terminal has accessed the network and is in a Radio Resource Control (RRC)-CONNECTED state.

The base station sends (may broadcast, unicast, or multicast) RI (1 ≤ *RI* ≤ *RImax)* and the corresponding *δ_{RI}* to the terminal, configures the number of downlink subbands to be 16, sends a CSI-RS to the terminal according to the configuration, and configures L = 4, *Pᵥ* = 1/8, R = 1 according to historical information, complexity, performance, and the like, and sends them to the terminal.

The terminal measures the downlink channel reference signal CSI-RS and calculates its etype II codebook and RI, restores the decomposed codebook to a format before decomposition, denoted as *W^{(RI)}",* calculates the difference between *W^{(RI)}"* and *W^{(RI)},* compares Δ with the threshold 0.1, and when Δ is greater than 0.1, feeds back a flag bit "1" indicating that AI compression feedback is adopted to the base station.

When the base station receives the flag bit indicating that AI compression feedback is adopted, it reselects L, *Pᵥ* and R according to historical experience and the like, for example, configures L = 4, *Pᵥ* = 1/8, R = 1, configures time-frequency resources (e.g., number of REs) required for the terminal to feed back CSI compressed feedback information, and sends the compression feedback model configuration information (including the reselected L, *Pᵥ,* R and resources) to the terminal through a PDCCH/PDSCH.

The terminal measures the downlink channel reference signal CSI-RS, calculates unquantized ${{W}^{˜}}_{2} \left(t\right)$ in the etype II codebook format according to *Pᵥ,* L, R in the model configuration information, performs zero padding on samples in which a dimension 2 × L × M of an element ${{W}_{2}^{ι}}^{˜}$ is less than [2 × L × M]*max* and completes compression of ${{W}^{˜}}_{2} \left(t\right)$, with the compressed channel information denoted as ${{W}^{˜}}_{2} {\left(t\right)}^{z}$*,* and feeds back ${{W}_{2}}^{˜} {\left(t\right)}^{z}$ to the base station according to the resource configuration, and simultaneously feeds back *W*₁(*t*) and *W_{f}*(*t*) in the etype II codebook feedback mode.

The base station receives *W*₁(*t*)*,* ${{W}^{˜}}_{2} {\left(t\right)}^{z}$ and *W_{f}*(*t*) fed back by the terminal, obtains ${{W}_{2}}^{˜} \left(t\right) ′$ by applying the decompression model to ${{W}_{2}}^{˜} {\left(t\right)}^{z}$, and calculates *W^{(RI)}(T)* by ${W}_{1} \left(t\right) {{W}^{˜}}_{2} \left(t\right) ′ {W}_{f} {\left(t\right)}^{T}$*.*

The various methods of the embodiments of the present disclosure have been described above. Apparatuses for implementing the above methods will be further provided below.

As shown in FIG. 6, an embodiment of the present disclosure further provides a data processing apparatus 600, including:
a first receiving module 601, configured to receive first configuration information of a codebook sent by a network device;
a first determining module 602, configured to obtain a first codebook according to the first configuration information;
a second determining module 603, configured to determine a second codebook according to the first codebook, wherein the second codebook is a codebook corresponding to the first codebook and not subjected to decomposition calculation;
a first sending module 604, configured to send first indication information to the network device according to the first codebook and the second codebook; wherein
the first indication information is used to indicate whether a feedback manner using an Artificial Intelligence (AI) compression model is adopted.

It should be noted that the device in this embodiment corresponds to the method applied to the terminal as described above, and the implementations in the above embodiments are all applicable to the embodiment of the device and can achieve the same technical effects. The device provided in the embodiments of the present disclosure is capable of implementing all the method steps realized in the above method embodiments, and can achieve the same technical effects. Details of portions identical to those in the method embodiments, as well as the beneficial effects thereof, are not described herein again.

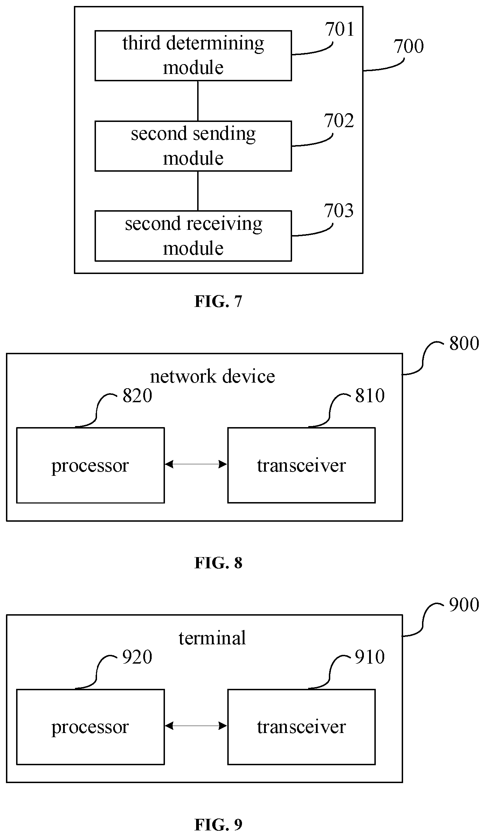

As shown in FIG. 7, an embodiment of the present disclosure further provides a data processing apparatus 700, including:
a third determining module 701, configured to determine first configuration information of a codebook;
a second sending module 702, configured to send the first configuration information to a terminal, to cause the terminal to obtain a first codebook according to the first configuration information, and determine a second codebook according to the first codebook; wherein the second codebook is a codebook corresponding to the first codebook and not subjected to decomposition calculation;
a second receiving module 703, configured to receive first indication information sent by the terminal according to the first codebook and the second codebook; wherein
the first indication information is used to indicate whether a feedback manner using an Artificial Intelligence (AI) compression model is adopted.

It should be noted that the device in this embodiment corresponds to the method applied on the network side as described above, and the implementations in the above embodiments are all applicable to the embodiment of the device and can achieve the same technical effects. The device provided in the embodiments of the present disclosure is capable of implementing all the method steps realized in the above method embodiments, and can achieve the same technical effects. Details of portions identical to those in the method embodiments, as well as the beneficial effects thereof, are not described herein again.

Referring to FIG. 8, an embodiment of the present disclosure further provides a network device 800, including a transceiver 810 and a processor 820, wherein
the processor is configured to determine first configuration information of a codebook;
the transceiver is configured to send the first configuration information to a terminal, to cause the terminal to obtain a first codebook according to the first configuration information, and determine a second codebook according to the first codebook; wherein the second codebook is a codebook corresponding to the first codebook and not subjected to decomposition calculation; and receive first indication information sent by the terminal according to the first codebook and the second codebook; wherein
the first indication information is used to indicate whether a feedback manner using an Artificial Intelligence (AI) compression model is adopted.

Referring to FIG. 9, an embodiment of the present disclosure further provides a terminal, including a transceiver 910 and a processor 920, wherein
receiving first configuration information of a codebook sent by a network device;
obtaining a first codebook according to the first configuration information;
determining a second codebook according to the first codebook; wherein the second codebook is a codebook corresponding to the first codebook and not subjected to decomposition calculation;
sending first indication information to the network device according to the first codebook and the second codebook; wherein
the first indication information is used to indicate whether a feedback manner using an Artificial Intelligence (AI) compression model is adopted.

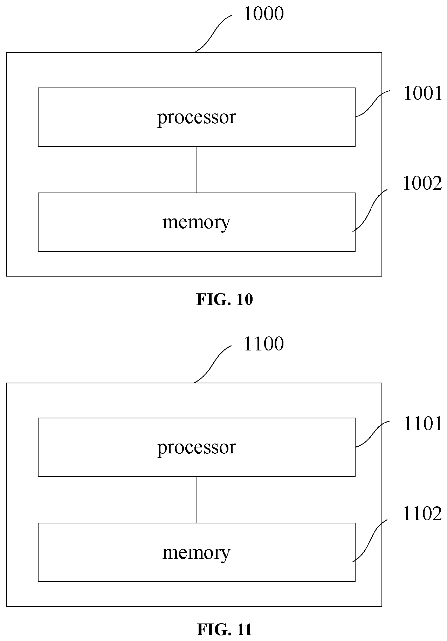

Referring to FIG. 10, an embodiment of the present disclosure further provides a terminal 1000, including a processor 1001, a memory 1002, and a computer program stored in the memory 1002 and executable on the processor 1001, wherein the computer program, when executed by the processor 1001, implements various processes of the foregoing data processing method embodiments executed by the terminal, and can achieve the same technical effects. Details are not described herein again for brevity.

Referring to FIG. 11, an embodiment of the present disclosure further provides a network device 1100, including a processor 1101, a memory 1102, and a computer program stored in the memory 1102 and executable on the processor 1101, wherein the computer program, when executed by the processor 1101, implements various processes of the foregoing data processing method embodiments executed by the network device, and can achieve the same technical effects. Details are not described herein again for brevity.

An embodiment of the present disclosure further provides a computer-readable storage medium storing a computer program, wherein the computer program, when executed by a processor, implements various processes of the above data processing method embodiments, and can achieve the same technical effects. To avoid repetition, details are not described herein again. The computer-readable storage medium is, for example, a Read-Only Memory (ROM), a Random Access Memory (RAM), a magnetic disk, or an optical disc.

It should be noted that, in this document, the terms "include", "comprise", or any other variations thereof are intended to cover non-exclusive inclusion, such that a process, method, article, or apparatus that includes a series of elements includes not only those elements, but also other elements not explicitly listed, or elements that are inherent to such process, method, article, or apparatus. Without further limitation, an element defined by the phrase "comprising a ..." does not exclude the presence of another identical element in the process, method, article, or apparatus that includes the element.

Through the description of the above implementations, those skilled in the art can clearly understand that the methods of the above embodiments may be implemented by software in combination with a necessary general hardware platform, or may be implemented by hardware, but in many cases the former is a better implementation. Based on such understanding, the technical solution of the present disclosure, in essence or the part contributing to the prior art, can be embodied in the form of a software product. The computer software product is stored in a storage medium (such as ROM/RAM, magnetic disk, optical disc), and includes several instructions for enabling a terminal (which may be a mobile phone, a computer, a server, an air conditioner, or a network device, etc.) to perform the methods described in various embodiments of the present disclosure.

The embodiments of the present disclosure have been described above with reference to the accompanying drawings, but the present disclosure is not limited to the specific implementations described above. The specific implementations described above are merely illustrative and not restrictive. Those of ordinary skill in the art, under the inspiration of the present disclosure, may make various other forms without departing from the spirit of the present disclosure and the scope protected by the claims, all of which fall within the protection of the present disclosure.

## Claims

1. A data processing method, applied to a terminal, the method comprising:
receiving first configuration information of a codebook sent by a network device;
obtaining a first codebook according to the first configuration information;
determining a second codebook according to the first codebook, wherein the second codebook is a codebook corresponding to the first codebook and not subjected to decomposition calculation;
sending first indication information to the network device according to the first codebook and the second codebook; wherein
the first indication information is used to indicate whether a feedback manner using an Artificial Intelligence (AI) compression model is adopted.

2. The data processing method according to claim 1, wherein the first configuration information comprises:
a number of oversampled Discrete Fourier Transform (DFT) beams, a number of DFT basis vectors, and a number of precoding matrices configurable per subband.

3. The data processing method according to claim 1, wherein obtaining the first codebook according to the first configuration information comprises:
performing decomposition calculation on the first configuration information according to a preset codebook format to obtain decomposition data;
encoding the decomposition data to obtain the first codebook.

4. The data processing method according to claim 1, wherein sending the first indication information to the network device according to the first codebook and the second codebook comprises:
determining a first coefficient matrix of the first codebook according to the first codebook;
determining a second coefficient matrix of the second codebook according to the second codebook;
calculating a difference between the first coefficient matrix and the second coefficient matrix;
comparing the difference with a preset threshold to obtain a comparison result;
sending the first indication information to the network device according to the comparison result.

5. The data processing method according to claim 4, wherein sending the first indication information to the network device according to the comparison result comprises:
when the difference is greater than the preset threshold, sending, to the network device, the first indication information used to indicate that the feedback manner using the AI compression model is adopted.

6. The data processing method according to claim 1, wherein after sending the first indication information to the network device according to the first codebook and the second codebook, the method further comprises:
when the first indication information indicates that the feedback manner using the AI compression model is adopted, receiving second configuration information of the codebook and second indication information used to indicate a target compression model;
determining a third codebook according to the second configuration information;
determining a third coefficient matrix of the third codebook according to the third codebook;
compressing the third coefficient matrix by using the target compression model to obtain a fourth coefficient matrix;
sending the fourth coefficient matrix to the network device.

7. The data processing method according to claim 6, wherein the second indication information comprises:
a target configuration parameter used to indicate the target compression model, wherein the target configuration parameter comprises at least one of a number of DFT basis vectors, a number of oversampled DFT beams, a number of precoding matrices configurable per subband, or a model index.

8. The method according to claim 6, further comprising:
sending a first parameter and a second parameter of the third codebook to the network device; wherein
the first parameter is used to report a beam group, and the second parameter comprises a DFT vector used for frequency-domain compression.

9. A data processing method, applied to a network device, the method comprising:
determining first configuration information of a codebook;
sending the first configuration information to a terminal, to cause the terminal to obtain a first codebook according to the first configuration information, and determine a second codebook according to the first codebook; wherein the second codebook is a codebook corresponding to the first codebook and not subjected to decomposition calculation;
receiving first indication information sent by the terminal according to the first codebook and the second codebook; wherein
the first indication information is used to indicate whether a feedback manner using an Artificial Intelligence (AI) compression model is adopted.

10. The data processing method according to claim 9, wherein after receiving the first indication information sent by the terminal, the method further comprises:
when the first indication information used to indicate that the feedback manner using the AI compression model is adopted is received, determining second configuration information of the codebook and second indication information used to indicate a target compression model; and sending the second configuration information and the second indication information to the terminal.

11. The data processing method according to claim 10, wherein after sending the second configuration information and the second indication information to the terminal, the method further comprises:
receiving a fourth coefficient matrix sent by the terminal; wherein the fourth coefficient matrix is obtained by the terminal by compressing, using the target compression model, a third coefficient matrix of a third codebook determined according to the second configuration information;
decompressing the fourth coefficient matrix by using a target decompression model to obtain a fifth coefficient matrix;
determining a codebook of a channel according to the fifth coefficient matrix.

12. The data processing method according to claim 11, wherein after sending the second configuration information and the second indication information to the terminal, the method further comprises:
receiving a first parameter and a second parameter of the third codebook sent by the terminal; wherein
determining the codebook of the channel according to the fifth coefficient matrix comprises:
determining the codebook of the channel according to the fifth coefficient matrix, the first parameter and the second parameter; wherein
the first parameter is used to report a beam group, and the second parameter comprises a Discrete Fourier Transform (DFT) vector used for frequency-domain compression.

13. The data processing method according to claim 9, further comprising:
collecting downlink channel estimation data;
determining, according to the downlink channel estimation data, configuration data selectable by the network device; wherein the configuration data comprises: a number of DFT basis vectors, a number of oversampled DFT beams, a number of precoding matrices configurable per subband, and a number of frequency basis vectors;
decomposing a codebook corresponding to the downlink channel estimation data according to the configuration data to obtain a sixth coefficient matrix;
grouping the sixth coefficient matrix according to the number of oversampled DFT beams and the number of frequency basis vectors in the sixth coefficient matrix to obtain a plurality of groups of target data;
determining, for each group of the target data, a corresponding compression model and a corresponding decompression model;
training the compression model and the decompression model corresponding to each group of the target data by using the target data, to obtain a model database; wherein the model database is used to store correspondences between compression models and model configuration parameters, and correspondences between decompression models and the compression models; and
sending the model database to the terminal.

14. The method according to claim 13, further comprising:
determining, according to a number of elements in the sixth coefficient matrix, a number of target elements of samples for training the compression model and the decompression model;
when the number of elements in the sixth coefficient matrix is less than the number of the target elements, adjusting the target data by zero padding to obtain target sample data;
training the compression model and the decompression model by using the target sample data; wherein
the number of elements in the sixth coefficient matrix is equal to a number of elements corresponding to a matrix formed by the number of oversampled DFT beams and the number of frequency basis vectors.

15. A data processing apparatus, comprising:
a first receiving module, configured to receive first configuration information of a codebook sent by a network device;
a first determining module, configured to obtain a first codebook according to the first configuration information;
a second determining module, configured to determine a second codebook according to the first codebook; wherein the second codebook is a codebook corresponding to the first codebook and not subjected to decomposition calculation;
a first sending module, configured to send first indication information to the network device according to the first codebook and the second codebook; wherein
the first indication information is used to indicate whether a feedback manner using an Artificial Intelligence (AI) compression model is adopted.

16. A data processing apparatus, comprising:
a third determining module, configured to determine first configuration information of a codebook;
a second sending module, configured to send the first configuration information to a terminal, to cause the terminal to obtain a first codebook according to the first configuration information, and determine a second codebook according to the first codebook; wherein the second codebook is a codebook corresponding to the first codebook and not subjected to decomposition calculation;
a second receiving module, configured to receive first indication information sent by the terminal according to the first codebook and the second codebook; wherein
the first indication information is used to indicate whether a feedback manner using an Artificial Intelligence (AI) compression model is adopted.

17. A network device, comprising a transceiver and a processor, wherein
the processor is configured to determine first configuration information of a codebook;
the transceiver is configured to send the first configuration information to a terminal, to cause the terminal to obtain a first codebook according to the first configuration information, and determine a second codebook according to the first codebook; wherein the second codebook is a codebook corresponding to the first codebook and not subjected to decomposition calculation; and receive first indication information sent by the terminal according to the first codebook and the second codebook; wherein
the first indication information is used to indicate whether a feedback manner using an Artificial Intelligence (AI) compression model is adopted.

18. A terminal, comprising a transceiver and a processor, wherein
receiving first configuration information of a codebook sent by a network device;
obtaining a first codebook according to the first configuration information, and
determining a second codebook according to the first codebook; wherein the second codebook is a codebook corresponding to the first codebook and not subjected to decomposition calculation;
sending first indication information to the network device according to the first codebook and the second codebook; wherein
the first indication information is used to indicate whether a feedback manner using an Artificial Intelligence (AI) compression model is adopted.

19. A terminal, comprising: a processor, a memory and a program stored in the memory and executable on the processor, wherein the program, when executed by the processor, implements the steps of the method according to any one of claims 1 to 8.

20. A network device, comprising: a processor, a memory and a program stored in the memory and executable on the processor, wherein the program, when executed by the processor, implements the steps of the method according to any one of claims 9 to 14.

21. A computer-readable storage medium storing a computer program, wherein the computer program, when executed by a processor, implements the steps of the method according to any one of claims 1 to 14.

22. A computer program product comprising computer instructions, wherein the computer instructions, when executed by a processor, implement the steps of the method according to any one of claims 1 to 14.
